# EUROPÄISCHE PATENTANMELDUNG

(11) **EP 1 662 109 A1**
(43) Veröffentlichungstag der Anmeldung: **31.05.2006**
(21) Anmeldenummer: 05021922.9
(22) Anmeldetag: 07.10.2005
(51) Int. Cl.: F01N 7/04, F02B 37/007

(54) **Verfahren zum Betrieb einer mager betreibbaren Brennkraftmaschine**

(30) Priorität: 26.11.2004 DE 102004057130
(71) Anmelder: Bayerische Motorenwerke Aktiengesellschaft, 80809 München (DE)
(72) Erfinder: Tribulowski, Jan, Dr., 85283 Wolnzach (DE); Fahl, Thomas, 80802 München (DE)

(57) **Zusammenfassung**

Verfahren zum Betrieb einer mager betreibbaren Brennkraftmaschine (2) mit einer ersten Zylindergruppe (2a), der ein erster Abgasstrang (3a) mit einem Abgasturbolader (7) zugeordnet ist und mit einer zweiten Zylindergruppe (2b), der ein zweiter Abgasstrang (3b) zugeordnet ist, wobei der erste und der zweite Abgasstrang (3a, 3b) in Strömungsrichtung vor dem Abgasturbolader (7) mit einem Stellelement (6) gasführend miteinander verbindbar sind, wobei bei magerem Betrieb der Brennkraftmaschine (2) der erste Abgasstrang (3a) von dem Stellelement (6) verschlossen wird.

Durch die vorgeschlagene Ausgestaltung wird der Wirkungsgrand des Abgasturbolader bei magerem Betreib verbessert.

## Beschreibung

Die Erfindung betrifft ein Verfahren zum Betrieb einer mager betreibbaren Brennkraftmaschine mit den Merkmalen aus dem Oberbegriff des Patentanspruchs 1.

Sie geht von der noch nicht veröffentlichten deutschen Patentanmeldung DE 10 2004 035 324 aus. In dieser ist eine Abgasanlage für eine Brennkraftmaschine mit einer ersten Zylindergruppe und einer zweiten Zylindergruppe beschrieben. Jeder Zylindergruppe ist ein eigener Abgasstrang zugeordnet, wobei in jedem Abgasstrang eine Abgasreinigungsanlage und in Strömungsrichtung davor ein Abgasturbolader vorgesehen ist. Zwischen der Brennkraftmaschine und den Abgasturboladern ist ein Stellelement angeordnet, mit dem die beiden Abgasstränge gasführend verbindbar sind oder einer der Abgasstränge verschließbar ist.

Auch wenn in der zitierten Patentanmeldung nicht explizit beschrieben ist, dass die Brennkraftmaschine auch mager betreibbar ist, ist dem Fachmann allgemein bekannt, dass gattungsgemäße Brennkraftmaschinen mager, d. h. mit einem Luftüberschuss, betrieben werden können. Bei magerem Betrieb der Brennkraftmaschine, insbesondere bei niedriger Drehzahl und/oder niedriger Last sinkt die Abgastemperatur aufgrund des Luftüberschusses bei der Verbrennung und somit der Wirkungsgrad der Abgasturbolader.

Aufgabe der vorliegenden Erfindung ist es, ein Verfahren aufzuzeigen, mit dem der Wirkungsgrad des Abgasturboladers bei magerem Betrieb der Brennkraftmaschine, insbesondere bei niedriger Drehzahl und/oder niedriger Last verbessert werden kann.

Diese Aufgabe wird durch das Merkmal im kennzeichnenden Teil des Patentanspruchs 1 dadurch gelöst, dass bei magerem Betrieb der Brennkraftmaschine der erste Abgasstrang von dem Stellelement verschlossen wird. In vorteilhafter Weise durchströmen bei dieser Betriebsart die Abgase beider Zylindergruppen den Abgasturbolader, sodass ausreichend Energie im Abgas vorhanden ist, um den Abgasturbolader mit einem guten Wirkungsgrand zu betreiben. Dieser Effekt stellt sich auch dann ein, wenn im zweiten Abgasstrang ein weiterer Abgasturbolader angeordnet ist, der bei der vorgeschlagenen Betriebsweise abgeschaltet wird.

Der vorteilhafte Effekt wird tritt noch deutlicher hervor bei den Betriebszuständen der Brennkraftmaschine gemäß der Patentansprüche 2 und 3.

Im Folgenden ist die Erfindung anhand eines bevorzugten Ausführungsbeispieles in einer Figur näher erläutert.

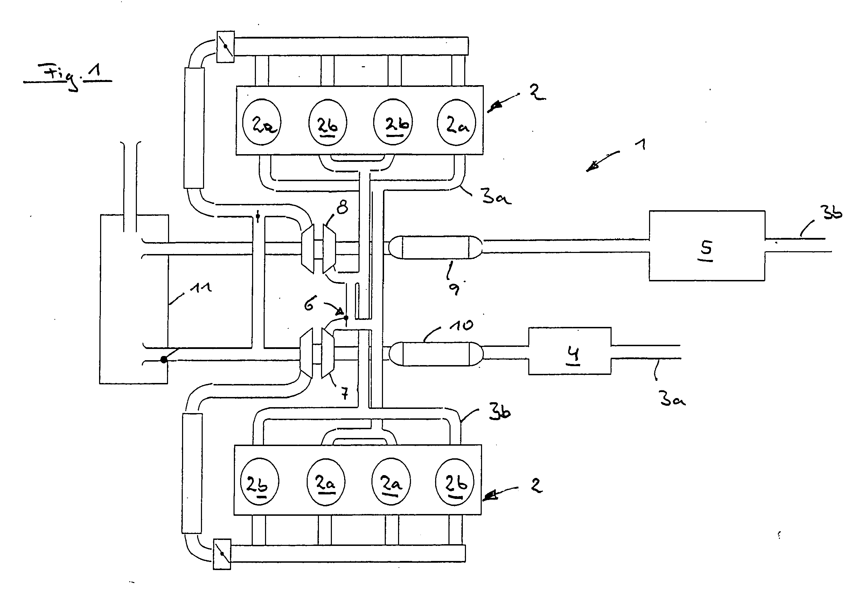

- Fig. 1: zeigt eine 8-zylindrige Brennkraftmaschine zur Durchführung des erfindungsgemäßen Verfahrens.

Fig. 1 zeigt eine 8-zylindrige Brennkraftmaschine 2, mit einer ersten Zylindergruppe 2a und mit einer zweiten Zylindergruppe 2b. Die Zylindergruppen 2a, 2b sind auf zwei Zylinderbänke verteilt und werden von einer gemeinsamen Sauganlage 11 mit Verbrennungsluft beschickt. Jeder Zylindergruppe 2a, 2b ist ein eigener Abgasstrang 3a, 3b zugeordnet, die gemeinsam eine Abgasanlage 1 bilden. Im ersten Abgasstrang 3a ist ein Abgasturbolader 7, in Strömungsrichtung dahinter eine erste Abgasreinigungsanlage 4, ein Dreiwegekatalysator oder Hauptkatalysator, angeordnet. Zwischen dem Abgasturbolader 8 und der ersten Abgasreinigungsanlage 4 ist eine weitere Abgasreinigungsanlage 10, ein Vorkatalysator, in den ersten Abgasstrang 3a integriert. Im zweiten Abgasstrang 3b ist ein zweiter Abgasturbolader 8 und in Strömungsrichtung dahinter eine zweite Abgasreinigungsanlage 5, ein DeNOx-Katalysator oder Stickoxidspeicherkatalysator, angeordnet. Zwischen der zweiten Zylindergruppe 2b und der zweiten Abgasreinigungsanlage 5 ist eine weitere Abgasreinigungsanlage 9, ebenfalls ein Vorkatalysator angeordnet. In Strömungsrichtung vor den Abgasturboladern 7, 8 sind die Abgasstränge 3a, 3b gasführend miteinander verbunden, wobei die Verbindung von einem Stellelement 6, einer Abgasklappe, geöffnet, bzw. der erste Abgasstrang 3a verschlossen und somit der erste Abgasturbolader 7 still gelegt werden kann.

Erfindungsgemäß wird mit dem Stellelement 6 der erste Abgasstrang 3a bei magerem Betrieb der Brennkraftmaschine 2 verschlossen, so dass die gesamten Abgase beider Zylindergruppen 2a, 2b nur durch den zweiten Abgasstrang 3b geleitet werden. Hierdurch wird der Wirkungsgrad des zweiten Abgasturboladers 8 deutlich gesteigert. Dieser Vorteil ist bei niederen Drehzahlen und/oder niedriger Last der Brennkraftmaschine 2 besonders ausgeprägt. Bei stöchiometrisch und fett betriebener Brennkraftmaschine 2 und/oder bei hoher Last und/oder Drehzahl werden der erste und der zweite Abgasstrang 3a, 3b von dem Stellelement 6 Abgas führend miteinander verbunden da bei diesen Betriebsarten ausreichend Energie im Abgas vorhanden ist, um einen oder beide Abgasturbolader 7, 8 mit gutem Wirkungsgrad betreiben zu können.

In weiteren Ausführungsbeispielen kann beispielsweise nur in dem zweiten Abgasstrang 3b ein Abgasturbolader 8 vorgesehen sein, während der erste Abgasstrang 3a keinen Abgasturbolader 7 aufweist. Ferner können in anderen Ausführungsbeispielen auch die weiteren Abgasreinigungsanlagen 9, 10 entfallen. Selbstverständlich kann das erfindungsgemäße Verfahren an 4-, 5-6-, 10-, oder 12-zylindrigen Brennkraftmaschinen 2 eingesetzt werden.

Wird die zweite Abgasreinigungsanlage 5 brennkraftmaschinenfern und die erste Abgasreinigungsanlage 4 brennkraftmaschinennah angeordnet, dann ergeben sich folgende zusätzliche Vorteile zu den oben genannten Vorteilen, hier aufgeführt in Verbindung mit den weiteren Abgasreinigungsanlagen 9, 10:
1. Im Magerbetrieb strömt das gesamte Abgas nur über die eine weitere Abgasreinigungsanlage 9. Im Vergleich zu einer Standardanordnung wird so eine Wärmesenke vermieden. Die zweite Abgasreinigungsanlage 5, der DeNOx-Katalysator, kann somit auch bei sehr magerem Betrieb der Brennkraftmaschine seine erforderliche Betriebstemperatur erreichen bzw. halten. Folglich sinkt der Kraftstoffbedarf bei gleicher Last, der bei der konventionellen Anordnung zum Erreichen und Halten der Mindestbetriebstemperatur nötig ist. Die Brennkraftmaschine 2 kann somit magerer betrieben werden, was sich positiv auf den Kraftstoffverbrauch auswirkt.
2. Die zweite Abgasreinigungsanlage 5, der DeNOx-Katalysator, kann somit näher an der Brennkraftmaschine 2 platziert werden:
   Im Volllastbetrieb strömen nur 50 % des Gesamtabgases über die zweite Abgasreinigungsanlage 5, der andere Teil über die erste Abgasreinigungsanlage 4. Im Vergleich zur Standardanordnung ergibt sich dadurch eine geringere thermische Belastung der zweiten Abgasreinigungsanlage 5. Die Aufteilung des Abgasmassenstroms führt weiterhin zu einem reduzierten Anfettungsbedarf bei der Volllast, der nötig ist zur Temperatursenkung des Abgases zum Schutz der zweiten Abgasreinigungsanlage 5. Auch dies wirkt sich positiv auf den Kraftstoffverbrauch aus.
   Im Teillastbetrieb sinkt bei räumlich näherer Anordnung der zweiten Abgasreinigungsanlage 5 an die Brennkraftmaschine 2 bei gleicher Last der Kraftstoffbedarf, der bei der konventionellen Anordnung zum Erreichen der Mindestbetriebstemperatur der zweiten Abgasreinigungsanlage 5 nötig ist. Die Brennkraftmaschine kann somit magerer betrieben werden, was sich wiederum positiv auf den Kraftstoffverbrauch auswirkt.
3. Bauraum:
   Die versetzte Anordnung der zwei Abgasreinigungsanlagen 4, 5 ermöglicht größere Freiheiten bei deren Positionierung.

### Bezugszeichenliste:

- 1: Abgasanlage
- 2: Brennkraftmaschine
- 2a: Erste Zylindergruppe
- 2b: Zweite Zylindergruppe
- 3a: Erster Abgasstrang
- 3b: Zweiter Abgasstrang
- 4: Erste Abgasreinigungsanlage
- 5: Zweite Abgasreinigungsanlage
- 6: Stellelement
- 7: Erster Abgasturbolader
- 8: Zweiter Abgasturbolader
- 9, 10: Weitere Abgasreinigungsanlage
- 11: Sauganlage

## Patentansprüche

1. Verfahren zum Betrieb einer mager betreibbaren Brennkraftmaschine (2) mit einer ersten Zylindergruppe (2a), der ein erster Abgasstrang (3a) mit einem Abgasturbolader (7) zugeordnet ist und mit einer zweiten Zylindergruppe (2b), der ein zweiter Abgasstrang (3b) zugeordnet ist, wobei der erste und der zweite Abgasstrang (3a, 3b) in Strömungsrichtung vor dem Abgasturbolader (7) mit einem Stellelement (6) gasführend miteinander verbindbar sind,
**dadurch gekennzeichnet, dass**
bei magerem Betrieb der Brennkraftmaschine (2) der erste Abgasstrang (3a) von dem Stellelement (6) verschlossen wird.

2. Verfahren nach Patentanspruch 1,
**dadurch gekennzeichnet, dass** bei niedriger Last der Brennkraftmaschine (2) der erste Abgasstrang (3a) von dem Stellelement (6) verschlossen wird.

3. Verfahren nach Patentanspruch 1 oder 2,
**dadurch gekennzeichnet, dass** bei niedriger Drehzahl der Brennkraftmaschine (2) der erste Abgasstrang (3a) von dem Stellelement (6) verschlossen wird.
